# EUROPEAN PATENT APPLICATION

(11) **EP 4 124 130 A1**
(43) Date of publication of application: **25.01.2023**
(21) Application number: 21784250.9
(22) Date of filing: 18.02.2021
(51) Int. Cl.: H04W 68/00

(54) **COMMUNICATION METHOD AND DEVICE**

(30) Priority: 10.04.2020 CN 202010280992
(71) Applicant: Huawei Technologies Co., Ltd., Shenzhen, Guangdong 518129 (CN)
(72) Inventor: XIE, Xi, Shenzhen, Guangdong 518129 (CN); CHANG, Junren, Shenzhen, Guangdong 518129 (CN); ZHANG, Xiangdong, Shenzhen, Guangdong 518129 (CN); ZHANG, Liangliang, Shenzhen, Guangdong 518129 (CN)
(74) Representative: Grünecker Patent- und Rechtsanwälte PartG mbB
(86) International application number: PCT/CN2021/076728
(87) International publication number: WO 2021/203842

(57) **Abstract**

This application provides a communication method and a device, and relates to the field of communication technologies. The communication method includes: A communication device receives first indication information from a first network device. The first indication information indicates whether to enable a group receiving function. The first indication information is carried in SI, or the first indication information is indicated by a value of a short message indicator bit field in DCI. Then the communication device determines, based on the first indication information, whether to enable the group receiving function. Based on this, when the communication device enables the group receiving function, power consumption of the communication device in a paging process can be effectively reduced.

## Description

This application claims priority to Chinese Patent Application No. 202010280992.3, filed with the China National Intellectual Property Administration on April 10, 2020 and entitled "COMMUNICATION METHOD AND DEVICE", which is incorporated herein by reference in its entirety.

### TECHNICAL FIELD

This application relates to the field of communication technologies, and in particular, to a communication method and a device.

### BACKGROUND

When a network pages a terminal, a plurality of terminals that monitor a same paging occasion (paging occasion, PO) receive and decode a physical downlink shared channel (physical downlink shared channel, PDSCH) based on paging scheduling information in downlink control information (downlink control information, DCI) sent by the network device on the PO, to obtain a paging message. The paging message includes a paging record list pagingrecordList, and the pagingrecordList indicates the terminal paged by the network device. Because the network device does not page terminals whose terminal identifiers are not in the pagingrecordList, it is unnecessary for these terminals to receive the PDSCH to obtain the paging message. Consequently, there is unnecessary power consumption of the terminals.

### SUMMARY

This application provides a communication method and a device, to reduce power consumption of a terminal in a paging process.

To achieve the foregoing objective, this application uses the following technical solutions.

According to a first aspect, a communication method is provided. The communication method includes: A communication device receives first indication information from a first network device. The first indication information indicates whether to enable a group receiving function. The first indication information is carried in system information (system information, SI), or the first indication information is indicated by a value of a short message indicator bit field in DCI. The communication device determines, based on the first indication information, whether to enable the group receiving function.

Based on the foregoing technical solution, in the technical solution provided in this application, the first network device generates the first indication information, to indicate a terminal whether to enable the group receiving function. The terminal determines, based on the first indication information, whether to enable the group receiving function. In this way, the first network device indicates, in some application scenarios (for example, a scenario in which there is a high false alarm probability of paging of the terminal), the terminal to enable the group receiving function, and the terminal receives a paging message by using a terminal group as a granularity. This can reduce additional power consumption of the terminal. In some other scenarios, the first network device indicates the terminal not to enable the group receiving function, to prevent additional management complexity due to terminal group management performed by the first network device on the terminal.

With reference to the first aspect, in a possible implementation of the first aspect, that the first indication information is indicated by a value of a short message indicator bit field in DCI includes: If the value of the short message indicator bit field is 01 or 11, the first indication information indicates to enable the group receiving function.

If the value of the short message indicator bit field is 01 or 11, it indicates that the DCI includes scheduling information of the paging message, and one or more communication devices in a plurality of communication devices that monitor a PO to which the DCI belongs are paged by the network device after receiving the paging message. Based on this, if the first indication information indicates to enable the group receiving function, power consumption generated in a paging process of the communication device can be reduced.

With reference to the first aspect, in a possible implementation of the first aspect, that the first indication information is indicated by a value of a short message indicator bit field in DCI includes: If the value of the short message indicator bit field is 00 or 10, the first indication information indicates not to enable the group receiving function.

If the value of the short message indicator bit field is 00 or 10, it indicates that the DCI does not include the scheduling information of the paging message. To be specific, the first network device does not page the communication device, and the communication device does not need to receive the paging message. Based on this, if the first indication information indicates not to enable the group receiving function, complexity of group management of the communication devices by the first network device can be reduced.

With reference to the first aspect, in a possible implementation of the first aspect, that the communication device determines, based on the first indication information, whether to enable the group receiving function includes: If the first indication information indicates to enable the group receiving function, and second indication information is received by the communication device, the communication device enables the group receiving function; or if the first indication information indicates not to enable the group receiving function, and/or second indication information is not received by the communication device, the communication device skips enabling or disable the group receiving function. The second indication information indicates a communication device group to which the communication device belongs.

If the communication device does not receive the second indication information, the communication device cannot determine information about the communication device group to which the communication device belongs. In this case, even if the first indication information indicates the communication device to enable the group receiving function, the communication device cannot normally use the group receiving function to receive the paging message. Therefore, in this case, if the communication device skips enabling the group receiving function, the network device can normally receive the paging message. If the first indication information indicates to enable the group receiving function, and second indication information is received by the communication device, the communication device enables the group receiving function, so that the power consumption generated in the paging process of the communication device can be reduced.

With reference to the first aspect, in a possible implementation of the first aspect, the method further includes: second indication information is received by the communication device from the first network device or a second network device. Based on this, if the communication device receives the second indication information from the first network device and the second network device, the communication device can determine information about the communication device group to which the communication device belongs.

With reference to the first aspect, in a possible implementation of the first aspect, if the communication device enables the group receiving function, the communication device parses third indication information in the DCI. The third indication information indicates a target communication device group to receive a paging message. If the target communication device group includes the communication device group to which the communication device belongs, the communication device receives the paging message. Based on this, the communication device can determine, by using the communication device group as the granularity, whether to receive the paging message.

With reference to the first aspect, in a possible implementation of the first aspect, the second indication information includes an identifier of the communication device group to which the communication device belongs. Based on this, the communication device can determine, based on the identifier of the communication device group to which the communication device belongs in the second indication information, the communication device group to which the communication device belongs.

With reference to the first aspect, in a possible implementation of the first aspect, the second indication information further includes any one of the following: a total quantity of communication device groups, and a total quantity of communication device groups monitoring a same paging occasion PO. Based on this, the communication device can determine a total quantity of communication device groups currently determined by the first network device.

With reference to the first aspect, in a possible implementation of the first aspect, the first network device is a first base station. Based on this, the first network device can send the first indication information, the second indication information, and the third indication information to the communication device.

With reference to the first aspect, in a possible implementation of the first aspect, the second network device is any one of the following: a second base station, or an access and mobility management function (access and mobility management Function, AMF). Based on this, the second network device can send the second indication information to the communication device.

With reference to the first aspect, in a possible implementation of the first aspect, the second indication information is carried in any one of the following: a radio resource control (radio resource control, RRC) message or a paging message. Based on this, the first network device or the second network device can send the second indication information to the communication device by using a message dedicated to the communication device or a broadcast message specific to terminals that monitor a same PO.

According to a second aspect, a communication method is provided. The communication method includes: A first network device generates first indication information. The first indication information indicates whether to enable a group receiving function. The first indication information is carried in SI, or the first indication information is indicated by a value of a short message indicator bit field in DCI. The first network device sends the first indication information to a communication device.

With reference to the second aspect, in a possible implementation of the second aspect, that the first indication information is indicated by a value of a short message indicator bit field in DCI includes: If the value of the short message indicator bit field is 01 or 11, the first indication information indicates to enable the group receiving function.

With reference to the second aspect, in a possible implementation of the second aspect, that the first indication information is indicated by a value of a short message indicator bit field in DCI includes: If the value of the short message indicator bit field is 00 or 10, the first indication information indicates not to enable the group receiving function.

With reference to the second aspect, in a possible implementation of the second aspect, the first network device generates second indication information. The second indication information indicates a communication device group to which the communication device belongs. The first network device sends the second indication information to the communication device.

With reference to the second aspect, in a possible implementation of the second aspect, the first network device generates third indication information. The third indication information indicates a target communication device group to receive a paging message. The third indication information is carried in the DCI. The first network device sends the third indication information to the communication device.

With reference to the second aspect, in a possible implementation of the second aspect, the second indication information includes an identifier of the communication device group to which the communication device belongs.

With reference to the second aspect, in a possible implementation of the second aspect, the second indication information further includes any one of the following: a total quantity of communication device groups, and a total quantity of communication device groups monitoring a same paging occasion PO.

With reference to the second aspect, in a possible implementation of the second aspect, the first network device is a first base station.

According to a third aspect, a communication method is provided. The communication method includes: A second network device generates second indication information. The second indication information indicates a communication device group to which a communication device belongs.

The second network device sends the second indication information to the communication device.

With reference to the third aspect, in a possible implementation of the third aspect, the second indication information includes an identifier of the communication device group to which the communication device belongs.

With reference to the third aspect, in a possible implementation of the third aspect, the second indication information further includes any one of the following: a total quantity of communication device groups, and a total quantity of communication device groups monitoring a same paging occasion PO.

With reference to the third aspect, in a possible implementation of the third aspect, the second network device is any one of the following: a second base station or an AMF

According to a fourth aspect, a communication device is provided. The communication device includes a processing module and a transceiver module.

The transceiver module is configured to receive first indication information from a first network device. The first indication information indicates whether to enable a group receiving function. The first indication information is carried in SI, or the first indication information is indicated by a value of a short message indicator bit field in DCI. The processing module is configured to determine, based on the first indication information, whether to enable the group receiving function.

With reference to the fourth aspect, in a possible implementation of the fourth aspect, that the first indication information is indicated by a value of a short message indicator bit field in DCI includes: If the value of the short message indicator bit field is 01 or 11, the first indication information indicates to enable the group receiving function.

As a possible implementation, that the first indication information is indicated by a value of a short message indicator bit field in DCI includes: If the value of the short message indicator bit field is 00 or 10, the first indication information indicates not to enable the group receiving function.

With reference to the fourth aspect, in a possible implementation of the fourth aspect, if the first indication information indicates to enable the group receiving function, and second indication information is received by the processing module by using the transceiver module, the processing module is further configured to enable the group receiving function. Alternatively, if the first indication information indicates not to enable the group receiving function, and/or second indication information is not received by the processing module by using the transceiver module, the processing module is further configured to determine not to enable or disable the group receiving function. The second indication information indicates a communication device group to which the communication device belongs.

With reference to the fourth aspect, in a possible implementation of the fourth aspect, the transceiver module is further configured to receive second indication information from the first network device or a second network device.

With reference to the fourth aspect, in a possible implementation of the fourth aspect, the processing module is further configured to: if the communication device enables the group receiving function, parse third indication information in the DCI, where the third indication information indicates a target communication device group to receive a paging message; if the target communication device group includes the communication device group to which the communication device belongs, receive the paging message by using the transceiver module.

With reference to the fourth aspect, in a possible implementation of the fourth aspect, the second indication information includes an identifier of the communication device group to which the communication device belongs.

With reference to the fourth aspect, in a possible implementation of the fourth aspect, the second indication information further includes any one of the following: a total quantity of communication device groups, and a total quantity of communication device groups monitoring a same paging occasion PO.

With reference to the fourth aspect, in a possible implementation of the fourth aspect, the first network device is a first base station.

With reference to the fourth aspect, in a possible implementation of the fourth aspect, the second network device is any one of the following: a second base station or an access and mobility management function AMF

According to a fifth aspect, a first network device is provided. The first network device includes a processing module and a transceiver module. The processing module is configured to generate first indication information. The first indication information indicates whether to enable a group receiving function, and the first indication information is carried in system information SI, or the first indication information is indicated by a value of a short message indicator bit field in downlink control information DCI. The transceiver module is configured to send the first indication information to a communication device.

With reference to the fifth aspect, in a possible implementation of the fifth aspect, that the first indication information is indicated by a value of a short message indicator bit field in DCI includes: If the value of the short message indicator bit field is 01 or 11, the first indication information indicates to enable the group receiving function.

With reference to the fifth aspect, in a possible implementation of the fifth aspect, that the first indication information is indicated by a value of a short message indicator bit field in DCI includes: If the value of the short message indicator bit field is 00 or 10, the first indication information indicates not to enable the group receiving function.

With reference to the fifth aspect, in a possible implementation of the fifth aspect, the processing module is further configured to generate second indication information. The second indication information indicates a communication device group to which the communication device belongs. The transceiver module is further configured to send the second indication information to the communication device.

With reference to the fifth aspect, in a possible implementation of the fifth aspect, the processing module is further configured to generate third indication information. The third indication information indicates a target communication device group to receive a paging message. The third indication information is carried in the DCI. The transceiver module is configured to send the third indication information to the communication device.

With reference to the fifth aspect, in a possible implementation of the fifth aspect, the second indication information includes an identifier of the communication device group to which the communication device belongs.

With reference to the fifth aspect, in a possible implementation of the fifth aspect, the second indication information further includes any one of the following: a total quantity of communication device groups, and a total quantity of communication device groups monitoring a same paging occasion PO.

With reference to the fifth aspect, in a possible implementation of the fifth aspect, the first network device is a first base station.

According to a sixth aspect, a second network device is provided. The second network device includes a transceiver module and a processing module. The processing module is configured to generate second indication information. The second indication information indicates a communication device group to which a communication device belongs. The transceiver module is configured to send the second indication information to a communication device.

With reference to the sixth aspect, in a possible implementation of the sixth aspect, the second indication information includes an identifier of the communication device group to which the communication device belongs.

With reference to the sixth aspect, in a possible implementation of the sixth aspect, the second indication information further includes any one of the following: a total quantity of communication device groups, and a total quantity of communication device groups monitoring a same paging occasion PO.

With reference to the sixth aspect, in a possible implementation of the sixth aspect, the second network device is any one of the following: a second base station or an access and mobility management function AMF

According to a seventh aspect, a communication device is provided. The communication device includes a memory and a processor. The memory is configured to store instructions. The processor is configured to execute the instructions stored in the memory, and the execution of the instructions stored in the memory enables the processor to implement the method according to the first aspect and any possible implementation of the first aspect.

According to an eighth aspect, a first network device is provided. The network device includes a memory and a processor. The memory is configured to store instructions. The processor is configured to execute the instructions stored in the memory, to implement the method in the second aspect or any possible implementation of the second aspect.

According to a ninth aspect, a second network device is provided. The network device includes a memory and a processor. The memory is configured to store instructions. The processor is configured to execute the instructions stored in the memory, to implement the method in the third aspect or any possible implementation of the third aspect.

According to a tenth aspect, a computer-readable storage medium is provided, where the computer readable storage medium stores a computer program. When the program is executed by a processor, the method in the first aspect or any possible implementation of the first aspect is implemented.

According to an eleventh aspect, a computer-readable storage medium is provided, and stores a computer program. When the program is executed by a processor, the method in the second aspect or any possible implementation of the second aspect is implemented.

According to a twelfth aspect, a computer-readable storage medium is provided. The computer-readable storage medium stores a computer program. When the program is executed by a processor, the method in the third aspect or any possible implementation of the third aspect is implemented.

According to a thirteenth aspect, this application provides a computer program product including instructions. When the computer program product runs on a computer, the computer is enabled to implement the method in the first aspect and any possible implementation of the first aspect.

According to a fourteenth aspect, this application provides a computer program product including instructions. When the computer program product runs on a computer, the computer is enabled to implement the method in the second aspect and any possible implementation of the second aspect.

According to a fifteenth aspect, this application provides a computer program product including instructions. When the computer program product runs on a computer, the computer is enabled to implement the method in the third aspect and any possible implementation of the third aspect.

According to a sixteenth aspect, this application provides a communication system, including a communication device, a first network device communicating with the communication device, and a second network device communicating with the communication device. The communication device is configured to implement the method in the first aspect and any possible implementation of the first aspect. The first network device is configured to implement the method in the second aspect and any possible implementation of the second aspect. The second network device is configured to implement the method in the third aspect and any possible implementation of the third aspect.

According to a seventeenth aspect, this application provides a system chip. The system chip may be used in a communication device. The system chip includes at least one processor, and related program instructions are executed by the at least one processor, to implement the method in the first aspect and any possible implementation of the first aspect. Optionally, the system chip may further include at least one memory. The memory stores the related program instructions.

According to an eighteenth aspect, this application provides a system chip. The system chip may be used in a first network device. The system chip includes at least one processor, and related program instructions are executed by the at least one processor, to implement the method in the second aspect and any possible implementation of the second aspect. Optionally, the system chip may further include at least one memory. The memory stores the related program instructions.

According to a nineteenth aspect, this application provides a system chip. The system chip may be used in a second network device. The system chip includes at least one processor, and related program instructions are executed by the at least one processor, to implement the method in the third aspect and any possible implementation of the third aspect. Optionally, the system chip may further include at least one memory. The memory stores the related program instructions.

It should be understood that, descriptions of technical features, technical solutions, beneficial effects, or similar words in this application do not imply that all features and advantages can be implemented in any individual embodiment. On the contrary, it may be understood that, the descriptions of the features or the beneficial effects mean that at least one embodiment includes a specific technical feature, technical solution, or beneficial effect. Therefore, the descriptions of the technical features, the technical solutions, or the beneficial effects in this specification may not necessarily belong to one embodiment. Further, the technical features, the technical solutions, and the beneficial effects described in embodiments may be combined in any proper manner. A person skilled in the art may understand that an embodiment may be implemented without one or more specific technical features, technical solutions, or beneficial effects in a specific embodiment. In other embodiments, additional technical features and beneficial effects may be further identified in a specific embodiment that does not reflect all embodiments.

### BRIEF DESCRIPTION OF DRAWINGS

FIG. 1 is a diagram of a system architecture of a communication system according to an embodiment of this application;
FIG. 2 is a schematic flowchart of a communication method according to an embodiment of this application;
FIG. 3 is a schematic flowchart of another communication method according to an embodiment of this application;
FIG. 4a is a schematic flowchart of another communication method according to an embodiment of this application;
FIG. 4b is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic diagram of a structure of a terminal apparatus according to an embodiment of this application;
FIG. 11 is a schematic diagram of a structure of another terminal according to an embodiment of this application;
FIG. 12 is a schematic diagram of a structure of a first network device according to an embodiment of this application;
FIG. 13 is a schematic diagram of a structure of another first network device according to an embodiment of this application;
FIG. 14 is a schematic diagram of a structure of a second network device according to an embodiment of this application;
FIG. 15 is a schematic diagram of a structure of another second network device according to an embodiment of this application;
FIG. 16 is a schematic diagram of a hardware structure of a terminal according to an embodiment of this application;
FIG. 17 is a schematic diagram of a structure of a communication apparatus according to an embodiment of this application;
FIG. 18 is a schematic diagram of a structure of another communication apparatus according to an embodiment of this application; and
FIG. 19 is a schematic diagram of a hardware structure of a network device according to an embodiment of this application.

### DESCRIPTION OF EMBODIMENTS

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, words such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the word "example" or "for example" is intended to present a related concept in a specific manner.

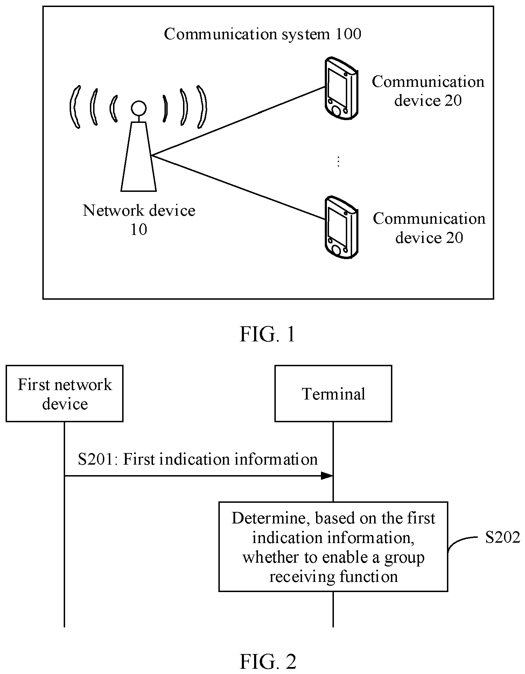

This application may be applied to a communication system 100, as shown in FIG. 1. The communication system 100 includes a network device 10 and a communication device 20.

The network device 10 in embodiments of this application is configured to send a paging message to the communication device 20. The communication device 20 is in an idle mode or a non-connected mode. After the network device 10 pages the communication device 20, the communication device 20 is configured to perform a corresponding operation (for example, establish an RRC connection, or fall back from an inactive mode to an idle mode) based on the paging message.

In this embodiment of this application, an example in which the communication device 20 is a terminal is used for description. A corresponding communication device group is denoted as a terminal group in this embodiment of this application.

A communication system in embodiments of this application includes but is not limited to a long term evolution (Long Term Evolution, LTE) system, a public land mobile network (Public Land Mobile Network, PLMN) system, a 5th-generation (5th-generation, 5G) system, a new radio (new radio, NR) system, a wireless local area network (wireless local area network, WLAN) system, a future evolved system, or a system converging a plurality of communication technologies. For example, a method provided in embodiments of this application may be specifically applied to an evolved universal terrestrial radio access network (evolved universal terrestrial radio access network, E-UTRAN) system and a next generation-radio access network (next generation-radio access network, NG-RAN) system.

A network device in embodiments of this application is a network-side entity configured to send a signal, receive a signal, or send a signal and receive a signal. The network device may be an apparatus that is deployed in a radio access network (radio access network, RAN) to provide a wireless communication function for a terminal, for example, a transmission reception point (transmission reception point, TRP), a base station (for example, an evolved NodeB (evolved NodeB, eNB or eNodeB), a next-generation base station node (next generation node base station, gNB), or a next-generation eNB (next-generation eNB, ng-eNB)), a control node in various forms (for example, a network controller, a radio controller (for example, a radio controller in a cloud radio access network (cloud radio access network, CRAN) scenario)), a road side unit (road side unit, RSU), or the like. Specifically, the network device may be a macro base station, a micro base station (also referred to as a small cell), a relay station, an access point (access point, AP), or the like in various forms, or may be an antenna panel of a base station. The control node may be connected to a plurality of base stations, and configure resources for a plurality of terminals within coverage of the plurality of base stations. In systems using different radio access technologies (radio access technologies, RATs), names of devices having a base station function may be different. For example, the base station may be referred to as an eNB or an eNodeB in the LTE system, and may be referred to as a gNB in the 5G system or the NR system. A specific name of the base station is not limited in this application. The network device may alternatively be a network device in a future evolved public land mobile network (public land mobile network, PLMN) or the like.

The terminal (the communication device) in embodiments of this application is a user-side entity configured to receive a signal, send a signal, or receive a signal and send a signal. The terminal is configured to provide a user with one or more of a voice service and a data connectivity service. The terminal may also be referred to as user equipment (user equipment, UE), a terminal, an access terminal, a subscriber unit, a subscriber station, a mobile station, a remote station, a remote terminal, a mobile device, a user terminal, a wireless communication device, a user agent, or a user apparatus. The terminal may be a vehicle to everything (vehicle to everything, V2X) device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), or a new energy vehicle (new energy vehicle). Alternatively, the terminal may be a device-to-device (device-to-device, D2D) device, for example, an electricity meter or a water meter. Alternatively, the terminal may be a mobile station (mobile station, MS), a subscriber unit (subscriber unit), an uncrewed aerial vehicle, an internet of things (internet of things, IoT) device, a station (station, ST) in a WLAN, a cellular phone (cellular phone), a smartphone (smart phone), a cordless telephone set, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device having a wireless communication function, a computing device, another processing device connected to a wireless modem, a vehicle-mounted device, or a wearable device (which may also be referred to as a wearable intelligent device). Alternatively, the terminal may be a terminal in a next generation communication system, for example, a terminal in a 5G system, a terminal in a future evolved PLMN, or a terminal in an NR system.

Embodiments of this application further relate to a core network (Core Network, CN) device. The CN device corresponds to different devices in different communication systems, for example, corresponds to a serving GPRS support node (Serving GPRS Support Node, SGSN) or a gateway GPRS support node (Gateway GPRS Support Node, GGSN) in the 3G system, corresponds to a mobility management entity (Mobility Management Entity, MME) or a serving gateway (Serving Gateway, S-GW) in the 4G system, and in the 5G system, corresponds to a core network-related device (for example, an AMF) in the 5G system. An example in which embodiments of this application are applied to the 5G system is used below for description. Embodiments of this application can also be applied to the 4G system. In this case, a corresponding network element in the 5G system is replaced with a network element having a corresponding function in the 4G system, for example, an AMF is replaced with an MME

For ease of understanding this application, some elements introduced in description of this application are first described herein.

### 1. RRC idle mode (RRC_IDLE)

The idle mode is a mode in which a terminal completes camping in a cell but does not perform a random access process. The terminal usually enters the idle mode after being powered on or after an RRC release is performed.

### 2. RRC connected mode (RRC_CONNECTED)

The connected mode is a mode in which a terminal completes a random access process but does not perform an RRC release. The terminal in the connected mode may perform data transmission with the network device.

When the terminal is in an idle mode, after the terminal completes the random access process, the terminal switches to the connected mode.

### 3. RRC inactive mode (RRC INACTIVE): The inactive mode is a mode between the connected mode and the idle mode.

For a terminal in the inactive mode, user plane bearer of an air interface is suspended (suspend), and a user plane bearer and a control plane bearer between a radio access network (radio access network, RAN) and a core network (core network, CN) are still maintained. When the terminal initiates a call or a service request, the user plane bearer of the air interface needs to be activated, and the existing user plane bearer and control plane bearer between the RAN and the CN are reused.

### 4. Paging message (paging message)

The paging message triggers a terminal to establish an RRC connection and the like. Content in the paging message is sent to the terminal through a physical downlink shared channel (physical downlink shared channel, PDSCH), and the PDSCH is scheduled by using a PDCCH scrambled by using a paging radio network temporary identifier (paging radio network temporary identifier, P-RNTI).

A process in which the terminal obtains the paging message is as follows: The terminal in the idle mode or the inactive mode periodically wakes up to monitor one PO. After the terminal wakes up, the terminal monitors the PDCCH scrambled by using the P-RNTI, and decodes paging DCI in the PDCCH to determine position (for example, time-frequency position) information of the PDSCH. The terminal receives the PDSCH based on the position information of the PDSCH, and obtains the paging message on the PDSCH. The terminal determines whether pagingrecordList in the paging message includes a terminal identifier of the terminal. If the pagingrecordList includes the terminal identifier of the terminal, the terminal performs a corresponding operation (for example, establishes an RRC connection or falls back from the inactive mode to the idle mode).

### 5. Paging false alarm

The paging false alarm is: If a plurality of terminals monitor a same PO, each of the plurality of terminals needs to receive and parse a PDSCH based on paging DCI sent by a network device on the PO, to obtain a paging message, and determines, based on pagingrecordList in the paging message, whether the network pages the terminal. For terminals that are not paged by the network and that are in the plurality of terminals, it is unnecessary for the terminals to parse the PDSCH to obtain the paging message, and a behavior that the terminal that is not paged by the network parses the PDSCH to obtain the paging message is a paging false alarm. The paging false alarm may cause unnecessary power consumption of the terminal.

### 6. PO

The PO is a set of one or more PDCCH monitoring occasions (PDCCH monitoring occasions). A network device sends paging DCI on the PO.

A terminal device in an idle mode or an inactive mode monitors, in each DRX cycle (paging cycle), the paging DCI sent by the network device on the PO.

### 7. Paging DCI

The paging DCI is DCI scrambled by a P-RNTI, and indicates paging scheduling information and/or a short message. The scheduling information of the paging message indicates a frequency domain position and a time domain position of a resource for sending a paging message. The short message indicates a system information update and/or an earthquake and tsunami warning/commercial mobile alert. Currently, the paging DCI includes the following content.

### 7.1. Short message indicator

The short message indicator occupies 2 bits in total, and indicates whether the DCI includes a short message and scheduling information of a paging message.

Generally, if a value of a short message indicator bit field is "01", it indicates that the DCI does not include the short message but includes the scheduling information of the paging message.

If a value of a short message indicator bit field is "10", it indicates that the paging DCI includes the short message but does not include the scheduling information of the paging message.

If a value of a short message indicator bit field is "11", it indicates that the paging DCI includes both the short message and the scheduling information of the paging message.

If a value of a short message indicator bit field is "00", it indicates that the paging DCI includes neither the short message nor the scheduling information of the paging message. "00" is usually a reserved value, and a terminal does not expect to receive the value.

### 7.2. Short message

The short message occupies 8 bits in total, indicates a system information update and/or an earthquake and tsunami warning/commercial mobile alert.

### 7.3. Scheduling information of a paging message

The scheduling information of the paging message includes frequency domain resource assignment (frequency domain resource assignment) of the paging message and time domain resource assignment (time domain resource assignment) of the paging message.

A bit occupied by the frequency domain resource assignment is calculated based on a related parameter, and the frequency domain resource assignment indicates a frequency domain position of a resource for sending the paging message.

The time domain resource assignment occupies 4 bits, and indicates a time-frequency position of the resource for sending the paging message.

### 7.4. Other scheduling information of 1 + 5 + 2 bits

### 7.5. 6 bits are reserved and not used currently.

When the network device pages the terminal, there is a paging false alarm. Consequently, power consumption of the terminal increases. To resolve this problem, this application provides a communication method. A group receiving function is added, so that the terminal receives a paging message by using a terminal group as a granularity, and determines, based on first indication information, whether to enable the group receiving function. The first indication information may be carried in SI, or indicated by a short message bit field in paging DCI. In this way, the terminal receives the first indication information sent by the network device, and correspondingly enables or disables the group receiving function. This can resolve the problem of a power consumption increase caused by the paging false alarm of the terminal. Descriptions are provided below.

The communication method provided in an embodiment of this application may be applied to a communication system, as shown in FIG. 1. As shown in FIG. 2, the communication method includes the following steps.

Step 201: A first network device sends first indication information to a terminal. Accordingly, the terminal receives the first indication information from the first network device.

The first indication information indicates whether to enable a group receiving function.

The group receiving function means that a function that a network device pages the terminal by using a group (group) as a granularity and the terminal receives a paging message by using the group as the granularity. The details are as follows.

The first network device performs grouping of terminals (UE grouping) in an idle mode or an inactive mode (for example, terminals monitoring a same PO), to obtain a plurality of terminal groups (UE groups). Then if the first network device needs to page the terminal, the first network device generates paging DCI. The paging DCI includes an identifier of a terminal group (denoted as a target terminal group) to which the terminal that needs to be paged belongs, or the paging DCI is scrambled by using a paging radio network temporary identifier (paging-radio network temporary identifier, P-RNTI) corresponding to a target terminal group. The first network device sends the paging DCI to the terminal.

If the paging DCI includes the identifier of the target terminal group, after receiving the paging DCI, the terminal decodes the paging DCI to determine whether the target terminal group includes the terminal group to which the terminal belongs. If the target terminal group includes the terminal group to which the terminal belongs, the terminal receives the paging message. If the target terminal group does not include the terminal group to which the terminal belongs, the terminal does not receive the paging message.

If the paging DCI is scrambled by using the P-RNTI corresponding to the target terminal group, the terminal detects the paging DCI by using a P-RNTI corresponding to a terminal group to which the terminal belongs. If the terminal receives and decodes the paging DCI based on the P-RNTI, it indicates that terminals in the target terminal group include the terminal group to which the terminal belongs, and the terminal receives the paging message. If the terminal does not receive and decode the paging DCI, it indicates that terminals in the target terminal group do not include the terminal group to which the terminal belongs, and the terminal does not receive the paging message.

In this way, all terminals monitoring a same PO need to obtain and decode a paging message on a PDSCH. According to the method provided in embodiments of this application, some terminals do not need to obtain or decode the paging message on the PDSCH, so that power consumption of the terminals is reduced.

It should be noted that the terminals in the idle mode or the inactive mode may be terminals monitoring a same PO, or may be terminals that are located in a coverage area of the first network device.

When the first network device is a base station, the first network device uses a method for grouping terminals monitoring a same PO, so that the first network device can perform group management on the terminals on the one PO. Because a quantity of terminals monitoring a same PO is usually small, this solution can reduce a calculation workload during grouping by the first network device. In addition, the first network device may determine, based on a paging false alarm problem of the terminals on the one PO, whether to use a group receiving function, to perform more refined management on the group receiving function.

In a possible implementation, the first indication information may be carried in SI, or the first indication information may be indicated by a value of a short message indicator bit field in DCI.

It should be noted that, when the first indication information is indicated by the value of the short message indicator bit field in the paging DCI, the paging DCI is scrambled by using the P-RNTI. In other words, the paging DCI is paging DCI sent by the first network device on one PO by using a physical downlink control channel (physical downlink control channel, PDCCH).

S202: The terminal determines, based on the first indication information, whether to enable the group receiving function.

It should be noted that, in this embodiment of this application, that the terminal determines, based on the first indication information, whether to enable the group receiving function includes: The terminal directly determines, based on the first indication information, whether to enable the group receiving function (denoted as a case 1); or the terminal determines, based on the first indication information and second indication information, whether to enable the group receiving function (denoted as a case 2). Descriptions are provided below separately. The second indication information indicates the terminal group to which the terminal belongs.

Case 1: The terminal directly determines, based on the first indication information, whether to enable the group receiving function.

In the case 1, S202 may be specifically implemented as S202a or S202b.

S202a: If the first indication information indicates to enable the group receiving function, the terminal enables the group receiving function.

After enabling the group receiving function, the terminal receives the paging message by using the terminal group as the granularity. This can reduce additional power consumption of the terminal for receiving the paging message.

S202b: If the first indication information indicates not to enable the group receiving function, the terminal skips enabling or disable the group receiving function.

When the terminal skips enabling or disable the group receiving function, additional management complexity due to terminal group management performed by the network device on the terminal can be prevented.

Case 2: The terminal determines, based on the first indication information and the second indication information, whether to enable the group receiving function.

In the case 2, S202 may be specifically implemented as S202c or S202d.

S202c: If the first indication information indicates to enable the group receiving function, and the terminal receives the second indication information, the terminal enables the group receiving function.

S202d: If the first indication information indicates not to enable the group receiving function, and/or the terminal does not receive the second indication information, the terminal skips enabling or disable the group receiving function.

Based on the foregoing technical solution, in the technical solution provided in this embodiment of this application, the first network device generates the first indication information, to indicate the terminal whether to enable the group receiving function. The terminal determines, based on the first indication information, whether to enable the group receiving function. In this way, the first network device indicates, in some application scenarios (for example, a scenario in which there is a high false alarm probability of paging of the terminal), the terminal to enable the group receiving function, and the terminal receives the paging message by using the terminal group as the granularity. This can reduce additional power consumption of the terminal. In some other scenarios, the first network device indicates the terminal not to enable the group receiving function, to prevent additional management complexity due to terminal group management performed by the first network device on the terminal.

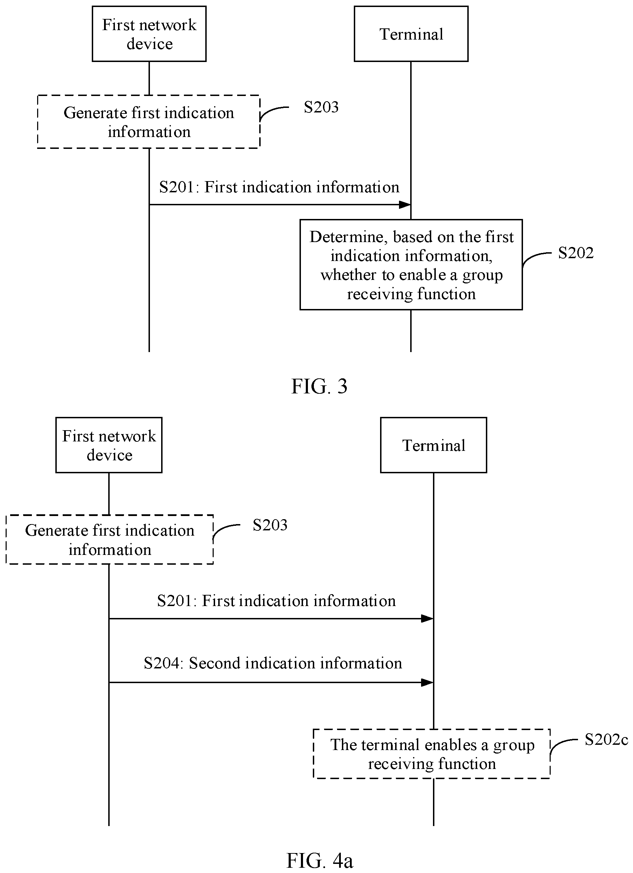

With reference to FIG. 2, as shown in FIG. 3, before S201, the method provided in this embodiment of this application further includes S203.

Step 203: The first network device generates the first indication information.

In a possible implementation, the first network device may determine, based on a quantity of terminals to be paged, whether to indicate the terminal to enable the group receiving function, to generate the corresponding first indication information.

Specifically, the first network device determines whether the quantity of terminals to be paged is greater than or equal to a preset quantity. If the quantity of terminals to be paged is greater than or equal to the preset quantity, the first network device determines to indicate the terminal to enable the group receiving function. Correspondingly, the first network device generates the first indication information that indicates to enable the group receiving function. If the quantity of terminals to be paged is not greater than or equal to the preset quantity, the first network device determines to indicate the terminal not to enable the group receiving function. Correspondingly, the first network device generates the first indication information that indicates not to enable the group receiving function.

The terminal paged by the first network device may be a terminal that is located in the coverage area of the first network device and that is paged by the first network device. In this case, after generating the first indication information, the first network device may send the first indication information to all terminals in the coverage area of the first network device, to indicate these terminals to enable/disable the group receiving function.

Alternatively, the terminal paged by the first network device may be a terminal that monitors the same PO and that is paged by the first network device. The same PO may be any one of a plurality of POs of the first network device. In this case, after generating the first indication information, the network device may send the first indication information to terminals monitoring the same PO, to indicate these terminals to enable/disable the group receiving function.

It should be noted that the first network device may generate first indication information with different content, to indicate a terminal whether to enable the group receiving function. For example, the first network device generates first indication information that includes indication for enabling the group receiving function, to indicate the terminal to enable the group receiving function. The first network device generates first indication information that includes indication for not enabling the group receiving function, to indicate the terminal not to enable the group receiving function.

Alternatively, the first network device may determine, based on whether it is necessary to indicate the terminal to enable the group receiving function, whether to generate the first indication information, to indicate the terminal whether to enable the group receiving function. For example, the first network device generates the first indication information, to indicate the terminal to enable the group receiving function. Correspondingly, when receiving the first indication information, the terminal enables the group receiving function. If no first indication information is generated, the first network device indicates the terminal not to enable the group receiving function. Correspondingly, the terminal receives no first indication information, and then skips enabling or disable the group receiving function.

Based on the foregoing technical solution, the first network device determines, based on the quantity of terminals to be paged, whether to indicate the terminal to enable the group receiving function. When the quantity of terminals paged by the first network device is greater than or equal to the preset quantity, a paging false alarm may exist in a large quantity of terminals. Based on this, the first network device determines to indicate the terminal to enable the group receiving function, so that additional power consumption of the terminal can be greatly reduced. When the quantity of terminals paged by the first network device is smaller than the preset quantity, a paging false alarm may usually exist in a small quantity of terminals. Based on this, to prevent additional management complexity due to terminal group management performed by the first network device on the terminal, the first network device determines to indicate the terminal not to enable the group receiving function.

In a possible implementation, in S201, when the first network device sends the first indication information to the terminal, the first network device may separately send the first indication information in a manner 1 or a manner 2. The manner 1 is: The first network device sends the first indication information to the terminal by using the SI. The manner 2 is: The first network device sends the first indication information to the terminal by using the short message indicator bit field in the paging DCI. The following describes the two manners separately.

Manner 1: The first network device sends the first indication information to the terminal by using the SI.

In the manner 1, the first indication information is carried in the SI.

In a possible implementation, the first network device adds the first indication information to the SI. For example, a bit is added to the SI to carry the first indication information. When a value of the bit is 0, it indicates that the first indication information indicates the terminal not to enable or indicates the terminal to disable the group receiving function. When the value of the bit is 1, it indicates that the first indication information indicates the terminal to enable the group receiving function.

It should be noted that, because the SI is a message broadcast by the first network device, when the first indication information is carried in the SI, all terminals in the coverage area of the first network device can receive the SI, and parse the SI to obtain the first indication information.

In another possible implementation, if the SI includes the first indication information, the SI indicates to enable the group receiving function. If the SI does not include the first indication information, the SI indicates not to enable the group receiving function. For example, when the SI has a new field that carries the first indication information, the SI indicates to enable the group receiving function. When the SI has no new field that carries the first indication information, the SI indicates not to enable the group receiving function.

Manner 2: The first network device sends the first indication information to the terminal by using the short message indicator bit field in the paging DCI.

In the manner 2, the first indication information is indicated by the value of the short message indicator bit field in the paging DCI. The short message indicator bit field in the paging DCI is reused for the first indication information.

If the value of short message indicator bit field is "01" or "11", the first indication information indicates to enable the group receiving function. If the value of short message indicator bit field is "00" or "10", the first indication information indicates not to enable the group receiving function. Details are described below.

The short message indicator bit field in the paging DCI includes 2 bits, and indicates whether the paging DCI includes a short message and scheduling information of a paging message. If the paging DCI does not include the scheduling information of the paging message, it indicates that the first network device currently does not page the terminal that monitors a PO to which the paging DCI belongs. In this case, the first network device does not need to indicate the terminal to enable the group receiving function, and the terminal does not need to parse and obtain the paging message on the PDSCH.

If the paging DCI includes the scheduling information of the paging message, it indicates that the first network device currently pages the terminal that monitors the PO. In this case, the first network device may indicate the terminal to enable the group receiving function, so that terminals in a terminal group to which the paged terminal belongs parse and obtain the paging message on the PDSCH.

Based on this, in this embodiment of this application, the first network device reuses the values "01" and "11" of the short message indicator bit field to indicate that the first indication information indicates to enable the paging message. The first network device reuses the values "00" and " 10" of the short message indicator bit field to indicate that the first indication information indicates not to enable the paging message.

It should be noted that, in the manner 1, because the SI is a message broadcast by the first network device, when the first indication information is carried in the SI, all the terminals in the coverage area of the first network device can receive the SI, and parse the SI to obtain the first indication information.

In the manner 2, the paging DCI is sent by the first network device to a specific terminal, and only a terminal that monitors the PO corresponding to the paging DCI can receive the paging DCI. Therefore, when the first indication information is indicated by the value of the short message indicator bit field in the paging DCI, only the terminal that monitors the PO can receive the paging DCI, and parse the paging DCI to obtain the first indication information.

Therefore, the methods described in the manner 1 and the manner 2 may be separately applicable to different scenarios (including a scenario a and a scenario b), and are separately described below.

### Scenario a: The terminal is located in the coverage area of the first network device

In the scenario a, the first network device may send the first indication information through the method recorded in the manner 1. In the manner 1, the first indication information is carried in the SI, and the first network device sends the SI in a broadcast manner. All terminals located in the coverage area of the first network device can receive the SI. Therefore, the first network device sends the first indication information in the manner 1, so that all the terminals in the coverage area of the first network device can receive the first indication information.

### Scenario b: The terminal is located in the coverage area of the first network device and monitors a same PO.

In the scenario b, the first network device may send the first indication information through the method recorded in the manner 2. In the manner 2, the first indication information is indicated by the value of the short message indicator bit field in the paging DCI. The first network device sends the paging DCI to a specific terminal, and only a terminal that monitors a PO to which the paging DCI belongs can receive the paging DCI. Therefore, the first network device sends the first indication information in the manner 2, so that the terminal that is located in the coverage area of the first network device and monitors the same PO can accurately receive the first indication information, and another terminal does not receive the first indication information.

It should be noted that scenarios to which the manner 1 and the manner 2 are applicable are merely examples for description. In actual use, the manner 1 may also be applied to the scenario b or another scenario, and the manner 2 may also be applied to the scenario a or another scenario. Details are not described in this application.

Based on the foregoing technical solution, according to the communication method provided in this embodiment of this application, the first indication information may be carried in the SI, or the first indication information may be indicated by the value of the short message indicator bit field in the paging DCI. When the first indication information is carried in the SI, the first indication information may be broadcast to all the terminals in the coverage area of the first network device. When indicated by the value of the short message indicator bit field in the paging DCI, the first indication information may be indicated for the terminal that monitors a same PO. In this way, the communication method provided in this embodiment of this application can be applied to different scenarios.

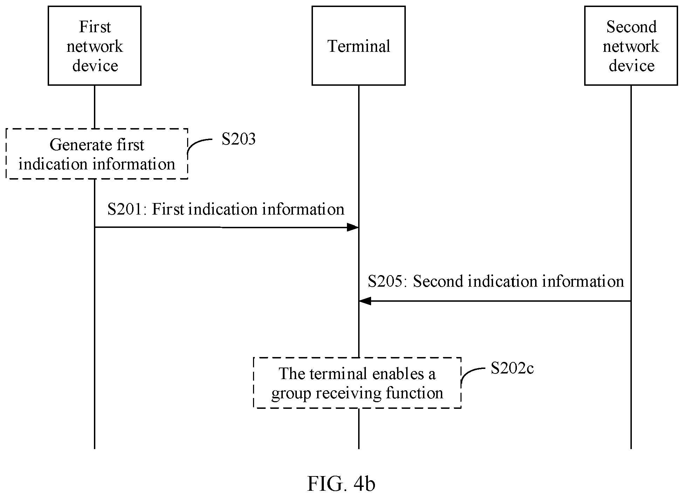

With reference to FIG. 3, as shown in FIG. 4a or FIG. 4b, if the terminal enables the group receiving function in S202c, before S202, the communication method provided in this embodiment of this application further includes: The terminal receives second indication information from the first network device, or receives second indication information from the second network device. Descriptions are provided below separately.

Case A: The terminal receives the second indication information from the first network device.

As shown in FIG. 4a, a process in which the terminal receives the second indication information from the first network device includes S204.

S204: The first network device sends the second indication information to the terminal. Correspondingly, the terminal receives the second indication information from the first network device.

The first network device is a first base station. Because the first base station needs to send the SI or the paging DCI to the terminal, the first base station is usually a base station currently accessed by the terminal.

In a possible implementation, the second indication information includes an identifier of the terminal group to which the terminal belongs. In addition, the second indication information may further include a total quantity of terminal groups. The total quantity of terminal groups may be a total quantity of terminal groups in the coverage area of the first network device and a total quantity of terminal groups that monitor the same PO.

When the first network device sends the second indication information to the terminal, the second indication information may be carried in any one of the following: an RRC message or a paging message. The first network device may send the second indication information to the terminal by using the RRC message or the paging message. After receiving the second indication information, the terminal may determine, based on the second indication information, the terminal group to which the terminal belongs, so that the terminal can determine, based on the terminal group to which the terminal belongs and a terminal group paged by the first network device, whether the terminal needs to receive the paging message.

It should be noted that, before the first network device sends the second indication information, an embodiment of this application further provides a method for generating the second indication information by the first network device. The method is specifically as follows:

The first network device determines a total quantity of to-be-grouped terminals. The first network device groups the terminals based on the total quantity of to-be-grouped terminals, to obtain a plurality of terminal groups. Then the first network device determines a terminal group to which each terminal belongs. The first network device generates, based on an identifier of each terminal group and a total quantity of terminal groups, second indication information corresponding to each terminal.

In another possible implementation, the second indication information includes a P-RNTI corresponding to the terminal group to which the terminal belongs. In this way, in a subsequent paging process, the terminal may detect the paging DCI based on the P-RNTI, and determine, based on whether the paging DCI is received and decoded, whether a target terminal group includes the terminal group to which the terminal belongs.

It should be noted that, before the first network device sends the second indication information, an embodiment of this application further provides a method for generating the second indication information by the first network device. The method is specifically as follows:

After grouping the terminals, the first network device allocates a corresponding P-RNTI to each terminal group. The first network device generates, based on a P-RNTI corresponding to a terminal group to which each terminal belongs, second indication information corresponding to each terminal.

Case B: The terminal receives second indication information from the second network device.

As shown in FIG. 4b, a process in which the terminal receives the second indication information from the second network device includes S205.

S205: The second network device sends the second indication information to the terminal. Correspondingly, the terminal receives the second indication information from the second network device.

The second network device is a second base station or an AMF. The second base station is different from the first base station. For example, the second base station may be previously accessed by the terminal. The first base station and the second base station may communicate with each other. The AMF is a core network device, and can communicate with the first base station.

It should be noted that an implementation of S205 is similar to that of S204, and details are not described herein again.

Based on the foregoing technical solution, in the communication method provided in this embodiment of this application, the terminal may determine, based on the second indication information, the terminal group to which the terminal belongs. In addition, the second indication information may be generated by the first network device or the second network device, so that the communication method can be applied to a plurality of scenarios.

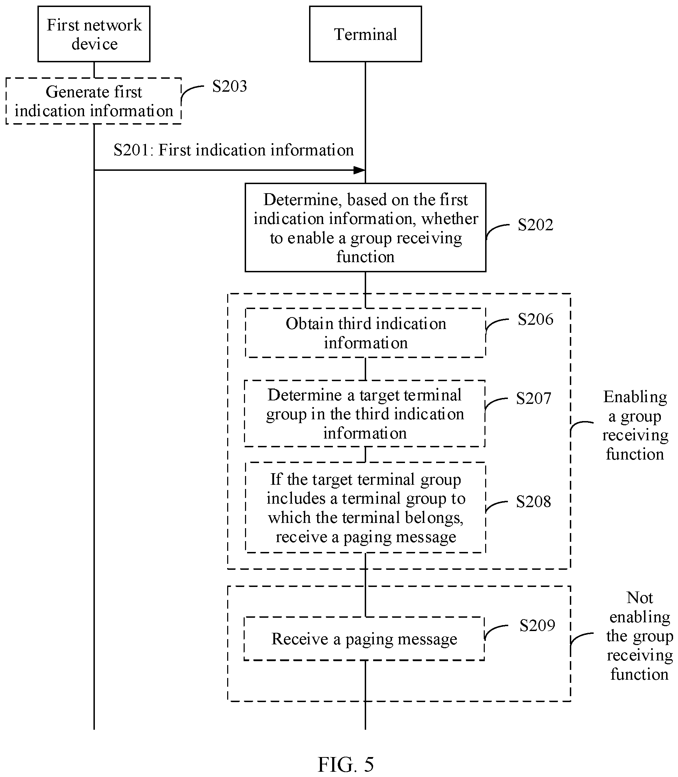

Based on the technical solution shown in FIG. 3, as shown in FIG. 5, after S203, the terminal may execute different actions for a case in which the terminal enables the group receiving function and for a case in which the terminal skips enabling the group receiving function. The following describes the actions in different cases.

Case a: The terminal enables the group receiving function.

When the terminal enables the group receiving function, the terminal receives the paging message in the following manner. Specifically, S206 to S208 are included.

S206: The terminal obtains third indication information.

The third indication information indicates a terminal in the target terminal group to receive the paging message. The third indication information may be carried in the paging DCI sent by the first network device. Alternatively, the third indication information may be indicated by the P-RNTI.

When the third indication information is carried in the paging DCI sent by the first network device, the paging DCI may include a bit field dedicated to carrying the third indication information. The terminal determines, by parsing a value of a bit in the bit field, the target terminal group indicated by the third indication information.

In a possible implementation, existing paging DCI includes 6 reserved bits, and the first network device determines that the 6 bits are a bit field that carries the third indication information. The third indication information may occupy one or more of the 6 bits.

In another possible implementation, the paging DCI includes 8 bits carrying the short message. When the paging DCI does not include the short message but includes the paging message (that is, when the value of the short message indicator bit field is 01), the first network device determines that the 8 bits carrying the short message are reused as a bit field that carries the third indication information. The third indication information may occupy one or more of the 8 bits.

When the third indication information is indicated by the P-RNTI, each terminal has a corresponding P-RNTI. The P-RNTI corresponding to the terminal is allocated by the first network device to the terminal based on the terminal group to which the terminal belongs. Alternatively, the P-RNTI corresponding to the terminal is pre-specified by using a communication protocol. For example, it is specified in the communication protocol that a first terminal group corresponds to a P-RNTI #1, a second terminal group corresponds to a P-RNTI #2, ..., and an Nth terminal group corresponds to a P-RNTI #N. The terminal determines the corresponding P-RNTI based on the terminal group to which the terminal belongs.

When the first network device initiates paging, the first network device scrambles paging DCI based on a P-RNTI (denoted as a first P-RNTI) corresponding to a terminal group to which a paged terminal belongs. In this way, only a terminal (a terminal having the first P-RNTI) in the terminal group to which the terminal belongs can obtain the paging DCI scrambled by using the first P-RNTI. In this case, if a terminal can obtain the paging DCI, it may indicate that the terminal is in a target terminal group.

S207: The terminal determines a target terminal group in the third indication information.

The third indication information may indicate the target terminal group in the following two manners: manner a: indicating the target terminal group by using a terminal group identifier; and manner b: indicating the target terminal group by using a value of a bit corresponding to the terminal group. Descriptions are provided below separately.

Manner a: indicating the target terminal group by using a terminal group identifier

In the bit field that carries the third indication information, a value of each bit may be 0 or 1. The first network device indicates terminal group identifiers of terminal groups by using permutations and combinations of values of all bits. After the first network device determines the target terminal group, the first network device sets a value of bits in the bit field that carries the third indication information as an identifier representing the target terminal group. After receiving the third indication information, the terminal determines the target terminal group based on the value of bits in the bit field that carries the third indication information.

In an example, the bit field that carries the third indication information is 6 reserved bits in the paging DCI. The first network device divides the terminals into four terminal groups, and identifiers of the four terminal groups are respectively "00", "01", "10", and " 11". After determining that the target terminal groups are "00" and "01", the first network device sets the value of the bits in the bit field that carries the third indication information as "0001". The value of the bits occupies the first 4 bits in the 6 reserved bits. The terminal receives the paging DCI, parses the bit field that carries the third indication information, and determines that the target terminal groups indicated by the third indication information are "00" and "01".

Correspondingly, when the second indication information indicates the terminal group to which the terminal belongs, the terminal group to which the terminal belongs is indicated by the terminal group identifier. For example, the second indication information indicates that a terminal group identifier of a terminal group to which a terminal Abelongs is "00".

Manner b: indicating the target terminal group by using the bit corresponding to the terminal group

The first network device determines a correspondence between each terminal group and each bit in the bit field that carries the third indication information. The first network device indicates, by setting a value of a bit, whether a terminal group corresponding to the bit is the target terminal group. For example, when determining that the value of the bit is 1, the first network device indicates that the terminal group corresponding to the bit is the target terminal group. When the value of the bit is 0, the first network device indicates that the terminal group corresponding to the bit is not the target terminal group.

In an example, the bit field that carries the third indication information is 6 reserved bits in the paging DCI. The first network device divides the terminals into four terminal groups. The first terminal group corresponds to a first bit in the 6 reserved bits; the second terminal group corresponds to a second bit in the 6 reserved bits; and the third terminal group corresponds to a third bit in the 6 reserved bits. The fourth terminal group corresponds to a fourth bit in the 6 reserved bits. The first network device determines that the target terminal group is the first terminal group and the third terminal group. Then the first network device sets the value of the bits in the bit field that carries the third indication information as "1010". The terminal receives the paging DCI, parses the bit field that carries the third indication information, and determines that the target terminal group indicated by the third indication information is the first terminal group and the third terminal group.

Correspondingly, when the second indication information indicates the terminal group to which the terminal belongs, the terminal group to which the terminal belongs is indicated by a sequence number of the terminal group. For example, the second indication information indicates that the terminal group to which the terminal A belongs is the first terminal group. In this case, the terminal A determines that the terminal A belongs to the first terminal group.

In addition, the second indication information may further include a total quantity of terminal groups. In this way, after receiving the third indication information, the terminal may parse only bits that are in the bit field carrying the third indication information and whose quantity is the same as the total quantity of terminal groups.

S208: If the target terminal group includes the terminal group to which the terminal belongs, the terminal receives the paging message.

A method for receiving the paging message by the terminal is the same as that in the prior art, and details are not described herein again.

Case b: The terminal skips enabling the group receiving function.

When the terminal skips enabling the group receiving function, the terminal receives the paging message in the following manner shown in S209.

S209: The terminal receives the paging message.

A method for receiving the paging message by the terminal is the same as that in the prior art, and details are not described herein again.

Based on the foregoing technical solution, the terminal executes a corresponding action based on whether to enable the group receiving function. If the terminal enables the group receiving function, the terminal determines, based on the third indication information, whether the first network device pages the terminal group to which the terminal belongs. If the first network device pages the terminal group to which the terminal belongs, the terminal receives the paging message. If the first network device does not page the terminal group to which the terminal belongs, the terminal does not receive the paging message, to save power consumption. If the terminal skips enabling the group receiving function, the terminal directly receives the paging message, to determine whether the first network device pages the terminal.

In this embodiment of this application, the second indication information may be sent to the terminal by a base station or the AMF. In addition, in the 5G network, if the base station is an architecture in which a centralized unit (centralized unit, CU) is separated from a distributed unit (distributed unit, DU), the second indication information may alternatively be sent to the terminal by the CU or the DU.

The following separately describes in detail four scenarios. The four scenarios are as following. Scenario 1: The base station sends the second indication information to the terminal. Scenario 2: The AMF sends the second indication information to the terminal. Scenario 3: The CU sends the second indication information to the terminal. Scenario 4: The DU sends the second indication information to the terminal.

Scenario 1: The base station sends the second indication information to the terminal.

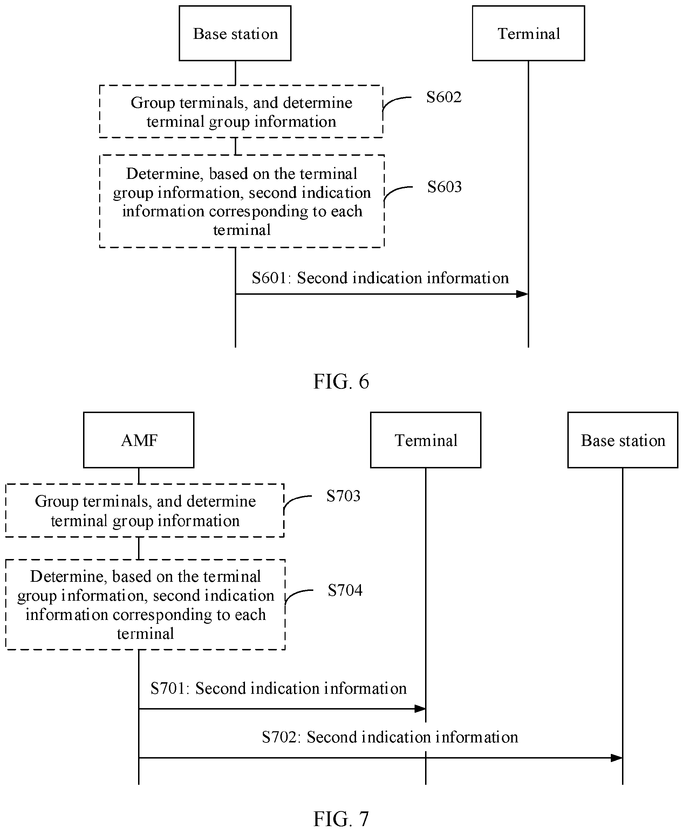

As shown in FIG. 6, the method specifically includes S601.

S601: The base station sends the second indication information to the terminal. Correspondingly, the terminal receives the second indication information from the base station.

The second indication information indicates a terminal group to which the terminal corresponding to the second indication information belongs. The second indication information is carried in any one of the following: an RRC message or a paging message.

It should be noted that the RRC message may be specifically implemented as an RRC connection release (RRC Connection Release) message in an LTE network, and the RRC message may be specifically implemented as an RRC release (RRC Release) message in a 5G network. The base station may accurately send the second indication information to a corresponding terminal by using the RRC message.

In a possible implementation, the base station determines second indication information of a plurality of terminals, and separately sends, to the terminals, the second indication information corresponding to the terminals.

In this embodiment of this application, as shown in FIG. 6, before S601, the method further includes S602 and S603.

S602: The base station groups terminals, and determines terminal group information.

The terminal group information includes the terminal group to which the terminal belongs. In addition, the terminal group information may further include the total quantity of terminal groups.

In a possible implementation, the total quantity of terminals is M. The base station groups X terminals in M terminals, and divides the X terminals into N terminal groups. M, X and N are all positive integers, M is greater than or equal to N, and M is greater than or equal to X. The base station may not group terminals other than the X terminals in the M terminals, and such terminals may receive paging messages without using the group receiving function.

For any one of the M terminals, the base station generates second indication information corresponding to the terminal. The second indication information includes an identifier of a terminal group of the terminal. In addition, the second indication information may further include a value of N (that is, a total quantity of terminal groups). The base station sends the terminal the second indication information corresponding to the terminal.

It should be noted that the M terminals may be terminals that are located in the coverage area of the base station or may be terminals that monitor a same PO. The same PO may be any one of a plurality of POs of the base station.

In an implementation of S602, the base station may group the terminals in any one of the following manner A, manner B, manner C, or manner D. Descriptions are provided below separately.

Manner A: The base station groups the terminals based on paging frequencies of the terminals.

For example, the base station groups terminals whose paging frequencies are greater than a first preset threshold into one group; groups terminals whose paging frequencies are greater than a second preset threshold and less than or equal to the first preset threshold into one group; and groups terminals whose paging frequencies are less than or equal to the second preset threshold into one group.

Manner B: The base station groups the terminals based on terminal information.

For example, the base station groups the terminals based on a terminal identifier (UE ID) of a terminal.

Manner C: The base station groups the terminals based on the paging frequencies of the terminals.

For example, the base station groups terminals with similar paging cycles into one group. For example, the base station groups terminals whose paging cycles are longer than a first preset cycle into one group; groups terminals whose paging cycles are longer than a second preset cycle and shorter than or equal to the second preset cycle into one group; and groups terminals whose paging cycles are shorter than or equal to the second preset cycle into one group.

Manner D: The base station randomly groups the terminals.

For example, the base station divides the terminals into N terminal groups by using a randomized algorithm.

S603: The base station determines, based on the terminal group information, second indication information corresponding to each terminal.

The second indication information indicates a terminal group to which a terminal corresponding to the second indication information belongs.

In a possible implementation, the second indication information includes an identifier of the terminal group to which the terminal corresponding to the second indication information belongs. In this way, after receiving the second indication information, the terminal may determine, based on the identifier of the terminal group in the second indication information, the terminal to which the terminal belongs. Then the terminal may determine, based on the terminal group to which the terminal belongs and the target terminal group indicated by the third indication information, whether the terminal needs to receive the paging message.

In addition, the second indication information may further include the total quantity of terminal groups (namely, a value of N recorded in S601). The total quantity of terminal groups may be a total quantity of terminal groups in the coverage area of the base station and a total quantity of terminal groups that monitor a same PO. A value of the total quantity of terminal groups is the same as a quantity of bits corresponding to the third indication information. In other words, the total quantity of terminal groups is the same as a quantity of bits in the bit field that carries the third indication information. In this way, the terminal may determine, based on the total quantity of terminal groups, the quantity of bits corresponding to the third indication information. In this way, when parsing paging DCI that carries the third indication information, the terminal can determine the third indication information by parsing N bits at a corresponding position.

For example, if the base station divides the terminals monitoring a same PO into three terminal groups, the second indication information generated by the base station includes 3 terminal groups monitoring the same PO. The base station sends the second indication information to the terminal. After receiving the second indication information, the terminal determines that the total quantity of terminal groups monitoring the same PO is 3, and correspondingly, the quantity of bits in the bit field that carries the third indication information is 3. Based on this, after receiving the paging DCI that carries the third indication information, the terminal may determine the third indication information by parsing 3 bits at a corresponding position.

It should be noted that a bit that is in the paging DCI and that is occupied by the bit field that carries the third indication information may be specified in advance. For example, the bit that is in the paging DCI and that is occupied by the bit field that carries the third indication information is first N bits in 6 reserved bits in the paging DCI. The value of N is the total quantity of terminal groups.

Scenario 2: The AMF sends the second indication information to the terminal.

As shown in FIG. 7, the method may specifically include S701 and S702.

S701: The AMF sends the second indication information to the terminal. Correspondingly, the terminal receives the second indication information from the AMF.

S702: The AMF sends the second indication information to a base station. Correspondingly, the base station receives the second indication information from the AMF.

It should be noted that a sequence of S701 and S702 is not limited in this embodiment of this application. For example, the AMF may first perform S701, and then perform S702. Alternatively, the AMF may first perform S702, and then perform S701. Alternatively, the AMF may simultaneously perform S701 and S702.

The AMF may send the second indication information to the base station and the terminal in the following two manners: a manner I and a manner II.

Manner I: The AMF sends the second indication information to the base station, and the AMF sends the second indication information to the terminal. That the AMF sends the second indication information to the terminal may be implemented as follows: The AMF sends the second indication information to the base station, and the base station sends the second indication information to the terminal in a transparent transmission manner.

Manner II: The AMF sends the second indication information to the base station, and the base station sends the second indication information to the corresponding terminal.

In a possible implementation, the base station is a split CU-DU architecture.

A manner in which the AMF sends the second indication information to the base station is: The AMF sends the second indication information to a CU. Correspondingly, the CU receives the second indication information from the AMF. The CU sends the second indication information to a DU. Correspondingly, the DU receives the second indication information from the CU.

That the base station sends the second indication information to the corresponding terminal may be implemented as follows: After receiving the second indication information from the AMF, the CU sends the second indication information to the DU. Correspondingly, the DU receives the second indication information from the CU. The DU sends the second indication information to the terminal. Correspondingly, the terminal receives the second indication information from the DU.

When the DU sends the second indication information to the terminal, the second indication information may be carried in an RRC message or a paging message.

In this embodiment of this application, as shown in FIG. 7, before S701 and S702, the method may further include S703 and S704.

S703: The AMF groups the terminals, and determines terminal group information.

It should be noted that a specific implementation process of S703 is similar to that of S602, and details are not described herein again.

It should be noted that when the AMF groups the terminals, the terminals may be terminals that are located in a coverage area of the first base station, or may be terminals that monitor a same PO, or may be terminals that are located in a coverage area of the AMF. This is not limited in embodiments of this application.

S704: The AMF determines, based on the terminal group information, second indication information corresponding to each terminal.

It should be noted that a specific implementation process of S704 is similar to that of S603, and details are not described herein again.

Scenario 3: The CU generates the second indication information.

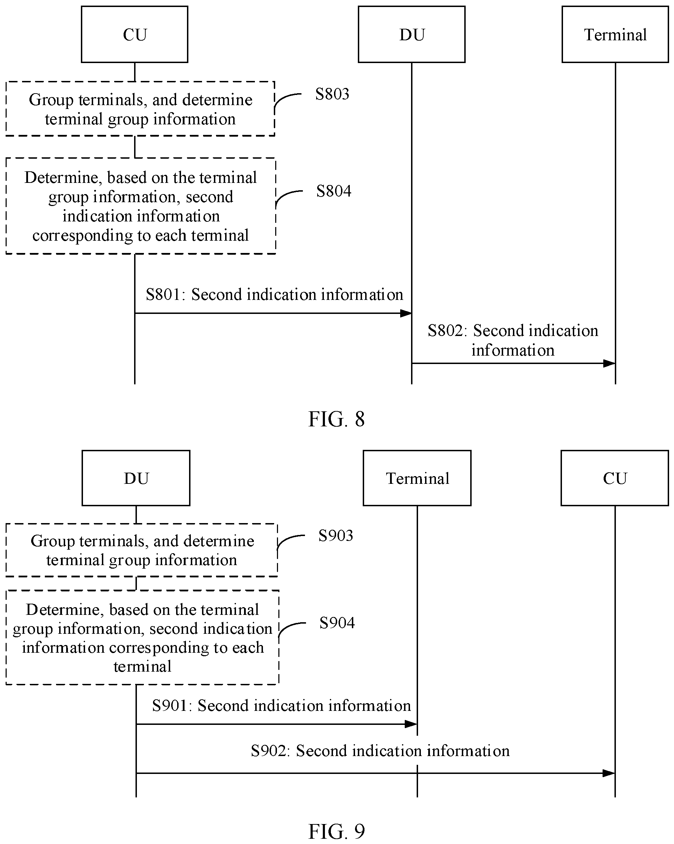

As shown in FIG. 8, the method may specifically include S801 and S802.

S801: The CU sends the second indication information to the DU. Correspondingly, the DU receives the second indication information from the CU.

S802: The DU sends the second indication information to the terminal. Correspondingly, the terminal receives the second indication information from the DU.

Specifically, the CU sends the second indication information to the DU, and the DU sends the second indication information to a corresponding terminal.

When the DU sends the second indication information to the terminal, the second indication information may be carried in an RRC message or a paging message.

In this embodiment of this application, as shown in FIG. 8, before S801 and S802, the method may further include S803 and S804.

S803: The CU groups the terminals, and determines terminal group information.

It should be noted that a specific implementation process of S803 is similar to that of S602, and details are not described herein again.

S804: The CU determines, based on the terminal group information, second indication information corresponding to each terminal.

It should be noted that a specific implementation process of S804 is similar to that of S603, and details are not described herein again.

Scenario 4: The DU generates the second indication information.

As shown in FIG. 9, the method may specifically include S901 and S902.

S901: The DU sends the second indication information to the terminal. Correspondingly, the terminal receives the second indication information from the DU.

When the DU sends the second indication information to the terminal, the second indication information may be carried in an RRC message or a paging message.

S902: The DU sends the second indication information to the CU. Correspondingly, the CU receives the second indication information from the DU.

It should be noted that a sequence of S901 and S902 is not limited in this embodiment of this application. For example, the AMF may first perform S901, and then perform S902. Alternatively, the AMF may first perform S902, and then perform S901. Alternatively, the AMF may simultaneously perform S901 and S902.

In this embodiment of this application, as shown in FIG. 9, before S901 and S902, the method may further include S903 and S904.

S903: The DU groups the terminals, and determines terminal group information.

It should be noted that a specific implementation process of S903 is similar to that of S602, and details are not described herein again.

S904: The DU determines, based on the terminal group information, second indication information corresponding to each terminal.

It should be noted that a specific implementation process of S904 is similar to that of S603, and details are not described herein again.

Based on the foregoing technical solution, this application provides a method for determining group information by a network device. The network device may be a base station, an AMF, a CU, or a DU. In this way, the network device may appropriately select, based on factors such as a grouping requirement and a current network status, a network device for grouping the terminals.

The foregoing describes the communication methods provided in embodiments of this application, and the following describes a terminal and a network device provided in embodiments of this application.

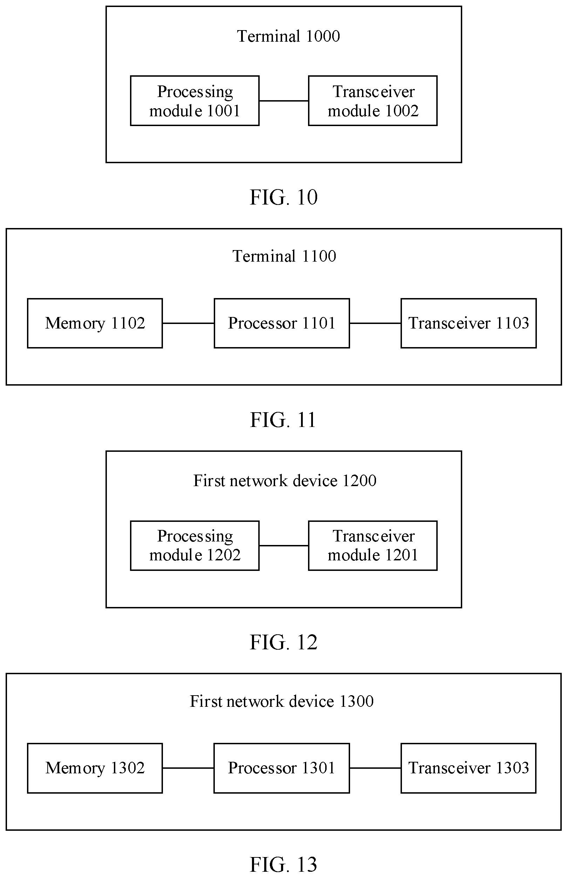

FIG. 10 is a schematic block diagram of a terminal 1000 according to an embodiment of this application. The terminal 1000 includes a processing module 1001 and a transceiver module 1002.

The transceiver module 1002 is configured to receive first indication information from a first network device. The first indication information indicates whether to enable a group receiving function. The first indication information is carried in system information SI, or the first indication information is indicated by a value of a short message indicator bit field in paging DCI.

The processing module 1001 is configured to determine, based on the first indication information, whether to enable the group receiving function.

In this embodiment of this application, the first network device generates the first indication information, to indicate the terminal to enable the group receiving function. The terminal determines, based on the first indication information, whether to enable the group receiving function. In this way, the first network device indicates, in some application scenarios (for example, a scenario in which there is a high false alarm probability of paging of the terminal), the terminal to enable the group receiving function, and the terminal receives a paging message by using a terminal group as a granularity. This can reduce additional power consumption of the terminal. In some other scenarios, the first network device indicates the terminal not to enable the group receiving function, to prevent additional management complexity due to terminal group management performed by the first network device on the terminal.

As a possible implementation, that the first indication information is indicated by a value of a short message indicator bit field in paging DCI includes: If the value of the short message indicator bit field is 01 or 11, the first indication information indicates to enable the group receiving function.

As a possible implementation, that the first indication information is indicated by a value of a short message indicator bit field in paging DCI includes: If the value of the short message indicator bit field is 00 or 10, the first indication information indicates not to enable the group receiving function.

As a possible implementation, if the first indication information indicates to enable the group receiving function, and second indication information is received by the processing module 1001 by using the transceiver module 1002, the processing module 1001 is further configured to enable the group receiving function. Alternatively, if the first indication information indicates not to enable the group receiving function, and/or second indication information is not received by the processing module 1001 by using the transceiver module 1002, the processing module 1001 is further configured to determine not to enable or disable the group receiving function. The second indication information indicates a communication device group to which the communication device belongs.

As a possible implementation, the transceiver module 1002 is further configured to receive the second indication information from the first network device or a second network device.

As a possible implementation, the processing module 1001 is further configured to: if the communication device enables the group receiving function, parse third indication information in the paging DCI, where the third indication information indicates a target communication device group to receive a paging message; if the target communication device group includes the communication device group to which the communication device belongs, receive the paging message by using the transceiver module 1002.

As a possible implementation, the second indication information includes an identifier of the communication device group to which the communication device belongs.

As a possible implementation, the second indication information further includes any one of the following: a total quantity of communication device groups, and a total quantity of communication device groups monitoring a same paging occasion PO.

As a possible implementation, the first network device is a first base station.

As a possible implementation, the second network device is any one of the following: a second base station or an access and mobility management function AMF

As shown in FIG. 11, an embodiment of this application further provides a terminal 1100. The terminal 1100 includes a processor 1101, a memory 1102, and a transceiver 1103. The memory 1102 stores instructions or a program, and the processor 1101 is configured to execute the instructions or the program stored in the memory 1102. When the instructions or the program stored in the memory 1102 are executed or is executed, the processor 1101 is configured to perform an operation performed by the processing module 1001 in the foregoing embodiment, and the transceiver 1103 is configured to perform an operation performed by the transceiver module 1002 in the foregoing embodiment.

It should be understood that the terminal 1000 or the terminal 1100 in embodiments of this application may correspond to the terminal in FIG. 2 to FIG. 9 in embodiments of this application. In addition, operations and/or functions of the modules in the terminal 1000 or the terminal 1100 are respectively used to implement corresponding procedures of the methods in FIG. 2 to FIG. 9. For brevity, details are not described herein again.

FIG. 12 is a schematic flowchart of a first network device 1200 according to an embodiment of this application. The first network device 1200 includes a transceiver module 1201 and a processing module 1202.

The processing module 1202 is configured to generate first indication information. The first indication information indicates whether to enable a group receiving function. The first indication information is carried in SI, or the first indication information is indicated by a value of a short message indicator bit field in paging DCI.

The transceiver module 1201 is configured to send the first indication information to a communication device.

In this embodiment of this application, the first network device generates the first indication information, to indicate the terminal to enable the group receiving function. The terminal determines, based on the first indication information, whether to enable the group receiving function. In this way, the first network device indicates, in some application scenarios (for example, a scenario in which there is a high false alarm probability of paging of the terminal), the terminal to enable the group receiving function, and the terminal receives a paging message by using a terminal group as a granularity. This can reduce additional power consumption of the terminal. In some other scenarios, the first network device indicates the terminal not to enable the group receiving function, to prevent additional management complexity due to terminal group management performed by the first network device on the terminal.

As a possible implementation, that the first indication information is indicated by a value of a short message indicator bit field in paging DCI includes: If the value of the short message indicator bit field is 01 or 11, the first indication information indicates to enable the group receiving function.

As a possible implementation, that the first indication information is indicated by a value of a short message indicator bit field in paging DCI includes: If the value of the short message indicator bit field is 00 or 10, the first indication information indicates not to enable the group receiving function.

As a possible implementation, a first network device generates second indication information. The second indication information indicates a communication device group to which a communication device belongs.

The first network device sends the second indication information to the communication device.

As a possible implementation, the processing module 1202 is further configured to generate third indication information. The third indication information indicates a target communication device group to receive a paging message. The third indication information is carried in the paging DCI. The transceiver module 1201 is configured to send the third indication information to the communication device.

As a possible implementation of the sixth aspect, the second indication information includes an identifier of the communication device group to which the communication device belongs.

As a possible implementation, the second indication information further includes any one of the following: a total quantity of communication device groups, and a total quantity of communication device groups monitoring a same paging occasion PO.

As a possible implementation, the first network device is a first base station.

It should be understood that the processing module 1202 in this embodiment of this application may be implemented by a processor or a processor-related circuit component, and the transceiver module 1201 may be implemented by a transceiver or a transceiver-related circuit component.

As shown in FIG. 13, an embodiment of this application further provides a first network device 1300. The first network device 1300 includes a processor 1301, a memory 1302, and a transceiver 1303. The memory 1302 stores instructions or a program, and the processor 1301 is configured to execute the instructions or the program stored in the memory 1302. When the instructions or the program stored in the memory 1303 are executed or is executed, the processor 1301 is configured to perform an operation performed by the processing module 1202 in the foregoing embodiment, and the transceiver 1303 is configured to perform an operation performed by the transceiver module 1201 in the foregoing embodiment.

It should be understood that the first network device 1200 or the first network device 1300 in embodiments of this application may correspond to the first network device in FIG. 2 to FIG. 9 in embodiments of this application. In addition, operations and/or functions of the modules in the first network device 1200 or the first network device 1300 are respectively used to implement corresponding procedures of the methods in FIG. 2 to FIG. 5. For brevity, details are not described herein again.

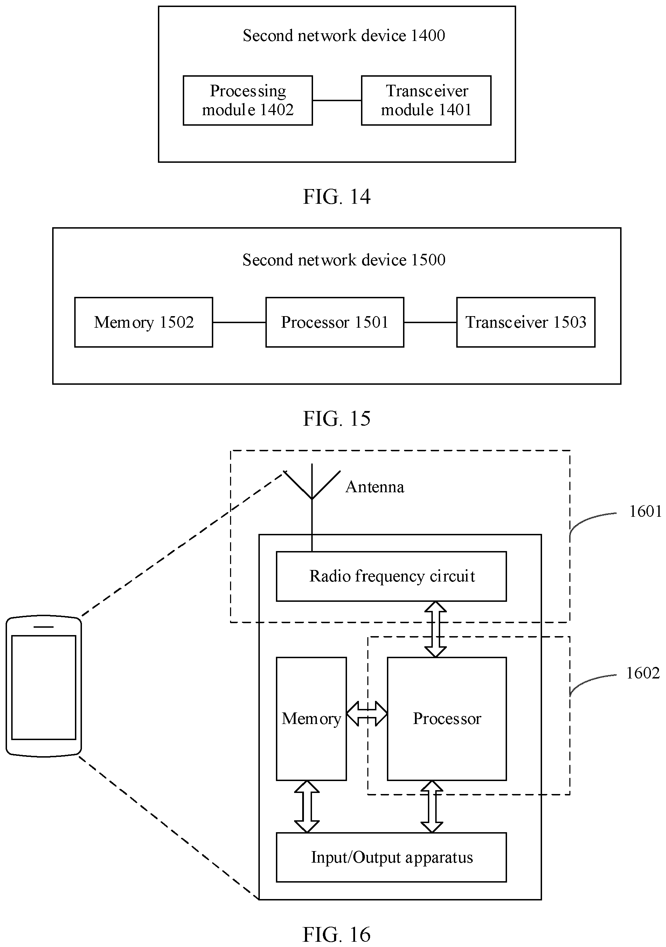

FIG. 14 is a schematic flowchart of a second network device 1400 according to an embodiment of this application. The second network device 1400 includes a transceiver module 1401 and a processing module 1402.

The processing module 1402 is configured to generate second indication information. The second indication information indicates a communication device group to which a communication device belongs.

The transceiver module 1401 is configured to send the second indication information to a communication device.

As a possible implementation of the sixth aspect, the second indication information includes an identifier of the communication device group to which the communication device belongs.

As a possible implementation, the second indication information further includes any one of the following: a total quantity of communication device groups, and a total quantity of communication device groups monitoring a same paging occasion PO.

As a possible implementation, the second network device is any one of the following: a second base station or an access and mobility management function AMF

It should be understood that the processing module 1402 in this embodiment of this application may be implemented by a processor or a processor-related circuit component, and the transceiver module 1401 may be implemented by a transceiver or a transceiver-related circuit component.

As shown in FIG. 15, an embodiment of this application further provides a second network device 1500. The second network device 1500 includes a processor 1501, a memory 1502, and a transceiver 1503. The memory 1502 stores instructions or a program, and the processor 1501 is configured to execute the instructions or the program stored in the memory 1502. When the instructions or the program stored in the memory 1503 are executed or is executed, the processor 1501 is configured to perform an operation performed by the processing module 1402 in the foregoing embodiment, and the transceiver 1503 is configured to perform an operation performed by the transceiver module 1401 in the foregoing embodiment.

It should be understood that the second network device 1400 or the second network device 1500 in embodiments of this application may correspond to the second network device in FIG. 4b in embodiments of this application. In addition, operations and/or functions of the modules in the second network device 1400 or the second network device 1500 are respectively used to implement corresponding procedures of the methods in FIG. 2 to FIG. 5. For brevity, details are not described herein again.

An embodiment of this application further provides a computer-readable storage medium. The computer-readable storage medium stores a computer program. When the program is executed by a processor, a procedure related to the terminal in FIG. 2 to FIG. 9 provided in the foregoing method embodiments may be implemented.

An embodiment of this application further provides a computer-readable storage medium. The computer-readable storage medium stores a computer program. When the program is executed by a processor, a procedure related to the first network device in FIG. 2 to FIG. 5 provided in the foregoing method embodiments may be implemented.

An embodiment of this application further provides a computer-readable storage medium. The computer-readable storage medium stores a computer program. When the program is executed by a processor, a procedure related to the second network device in FIG. 4b provided in the foregoing method embodiments may be implemented.

An embodiment of this application further provides a communication apparatus. The communication apparatus may be a terminal or a circuit. The communication apparatus may be configured to perform actions performed by the terminal in the foregoing method embodiments.

When the communication apparatus is a terminal, FIG. 16 is a schematic structural diagram of a simplified terminal. For ease of understanding and illustration, in FIG. 16, a mobile phone is used as an example of the terminal. As shown in FIG. 16, the terminal includes a processor, a memory, a radio frequency circuit, an antenna, and an input/output apparatus. The processor is mainly configured to: process a communication protocol and communication data, and control the terminal to execute a software program, process data of the software program, and the like. The memory is mainly configured to store the software program and the data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus such as a touchscreen, a display, or a keyboard is mainly configured to receive data entered by a user, and output data to the user. It should be noted that some types of terminals may have no input/output apparatus.

When data needs to be sent, after performing baseband processing on the to-be-sent data, the processor outputs a baseband signal to a radio frequency circuit. After performing radio frequency processing on the baseband signal, the radio frequency circuit sends a radio frequency signal in a form of an electromagnetic wave through the antenna. When data is sent to the terminal, the radio frequency circuit receives a radio frequency signal by using the antenna, converts the radio frequency signal into a baseband signal, and outputs the baseband signal to the processor. The processor converts the baseband signal into data, and processes the data. For ease of description, only one memory and one processor are shown in FIG. 16. In an actual terminal product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna having receiving and sending functions and the radio frequency circuit may be considered as a transceiver unit of the terminal, and the processor having a processing function is considered as a processing unit of the terminal. As shown in FIG. 16, the terminal includes a transceiver unit 1601 and a processing unit 1602. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1601 and that is configured to implement a receiving function may be considered as a receiving unit, and a component that is in the transceiver unit 1601 and that is configured to implement a sending function may be considered as a sending unit. That is, the transceiver unit 1601 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1601 is configured to perform a sending operation and a receiving operation on a terminal side in the foregoing method embodiments, and the processing unit 1602 is configured to perform an operation other than the receiving/sending operation of the terminal in the foregoing method embodiments.

For example, in an implementation, the transceiver unit 1601 is configured to perform sending operations on the terminal side in S201 in FIG. 2, S201 in FIG. 3, S201 and S204 in FIG. 4a, S201 and S205 in FIG. 4b, S201 in FIG. 5, S601 in FIG. 6, S701 in FIG. 7, S802 in FIG. 8, and S901 in FIG. 9, and/or the transceiver unit 1601 is further configured to perform another sending/receiving step on the terminal side in this embodiment of this application. The processing unit 1602 is configured to perform S202 in FIG. 2, S202 in FIG. 3, S202c in FIG. 4a, S202c in FIG. 4b, S202 in FIG. 5, and S206 to S209, and/or the processing unit 1602 is further configured to perform other processing steps on the terminal side in this embodiment of this application.

When the communication apparatus is a chip apparatus or circuit, the apparatus may include the transceiver unit and the processing unit. The transceiver unit may be an input/output circuit and/or a communication interface. The processing unit is an integrated processor, a microprocessor, or an integrated circuit.

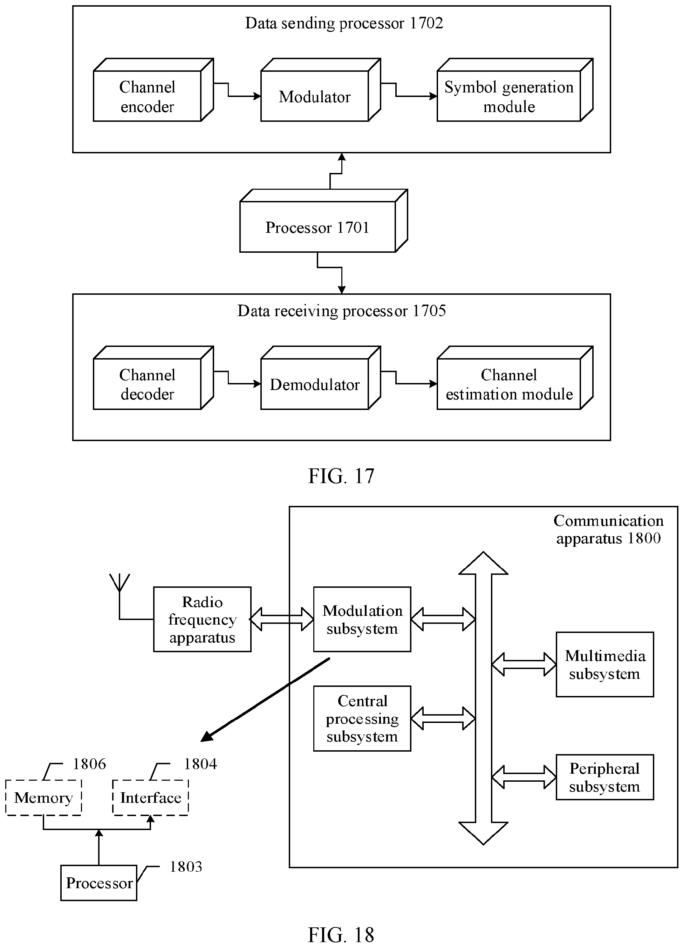

When the communication apparatus in this embodiment is a terminal, refer to a device shown in FIG. 17. In an example, the device may implement a function similar to that of the processor 1101 in FIG. 11. In FIG. 17, the device includes a processor 1701, a data sending processor 1702, and a data receiving processor 1705. The processing module 1001 in the foregoing embodiment may be the processor 1701 in FIG. 17, and completes a corresponding function. The transceiver module 1002 in the foregoing embodiment may be the data sending processor 1702 and/or the data receiving processor 1705 in FIG. 17. Although a channel encoder and a channel decoder are shown in FIG. 17, it may be understood that these modules are not intended to constitute limitative description of this embodiment and are merely examples.

FIG. 18 shows another form of the communication apparatus in this embodiment. The communication apparatus 1800 includes modules such as a modulation subsystem, a central processing subsystem, and a peripheral subsystem. The communication apparatus in this embodiment may be used as the modulation subsystem. Specifically, the modulation subsystem may include a processor 1803 and an interface 1804. The processor 1803 completes a function of the foregoing processing module 1001, and the interface 1804 completes a function of the foregoing transceiver module 1002. In another variant, the modulation subsystem includes a memory 1806, a processor 1803, and a program that is stored in the memory 1806 and that can run on the processor. When executing the program, the processor 1803 implements the method on the terminal side in the foregoing method embodiments. It should be noted that the memory 1806 may be nonvolatile or volatile. The memory 1806 may be located in the modulation subsystem, or may be located in the communication apparatus 1800, provided that the memory 1806 can be connected to the processor 1803.

In another form of this embodiment, a computer-readable storage medium is provided. The computer-readable storage medium stores instructions. When the instructions are executed, the method on the terminal side in the foregoing method embodiments is performed.

In another form of this embodiment, a computer program product including instructions is provided. When the instructions are executed, the method on the terminal side in the foregoing method embodiments is performed.

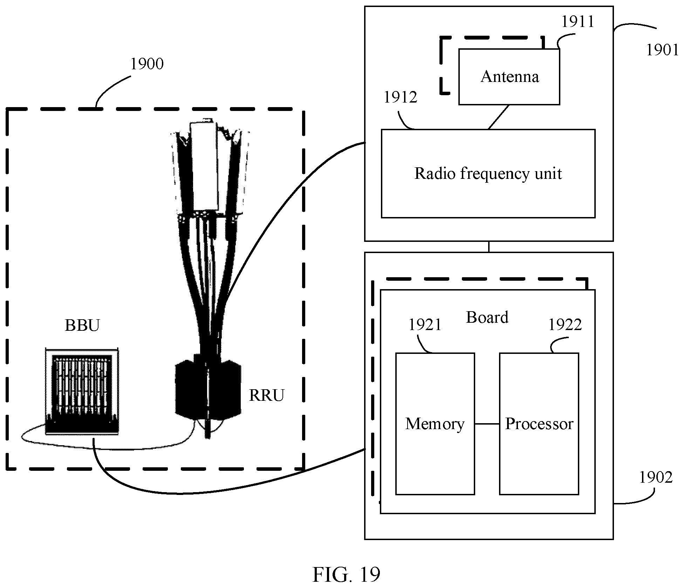

When the communication apparatus in this embodiment is a network device, the network device may be shown in FIG. 19. An apparatus 1900 includes one or more radio frequency units such as a remote radio unit (remote radio unit, RRU) 1901 and one or more baseband units (baseband unit, BBU) (which may also be referred to as digital units, digital units, DU) 1902. The RRU 1901 may be referred to as a transceiver module, and corresponds to the transceiver module 1201 in FIG. 12. Optionally, the transceiver module may also be referred to as a transceiver machine, a transceiver circuit, a transceiver, or the like, and may include at least one antenna 1911 and a radio frequency unit 1912. The RRU 1901 is mainly configured to: receive and send a radio frequency signal, and perform conversion between the radio frequency signal and a baseband signal. For example, the RRU 1901 is configured to send indication information to a terminal. The BBU 1902 is mainly configured to: perform baseband processing, control the base station, and so on. The RRU 1901 and the BBU 1902 may be physically disposed together, or may be physically disposed separately, to be specific, may be distributed base stations.

The BBU 1902 is a control center of the base station, or may be referred to as a processing module. The BBU 1902 may correspond to a processing module 1202 in FIG. 12, and is mainly configured to implement a baseband processing function, for example, channel coding, multiplexing, modulation, or spreading. For example, the BBU (the processing module) may be configured to control the base station to perform an operation procedure related to the network device in the foregoing method embodiment, for example, generate the foregoing indication information.

In an example, the BBU 1902 may include one or more boards, and a plurality of boards may jointly support a radio access network (for example, an LTE network) having a single access standard, or may separately support radio access networks (for example, the LTE network, a 5G network, or another network) having different access standards. The BBU 1902 further includes a memory 1921 and a processor 1922. The memory 1921 is configured to store necessary instructions and data. The processor 1922 is configured to control the base station to perform a necessary action, for example, configured to control the base station to perform an operation procedure related to the network device in the foregoing method embodiments. The memory 1921 and the processor 1922 may serve one or more boards. In other words, a memory and a processor may be disposed on each board. Alternatively, a plurality of boards may share a same memory and a same processor. In addition, a necessary circuit may further be disposed on each board.

It should be understood that, the processor mentioned in embodiments of this application may be a central processing unit (Central Processing Unit, CPU), or may be another general purpose processor, a digital signal processor (Digital Signal Processor, DSP), an application specific integrated circuit (Application Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification is intended to include but not limited to these memories and any memory of another proper type.

It should be further understood that "first", "second", "third", "fourth", and various numbers in this specification are merely used for differentiation for ease of description, and are not construed as a limitation to the scope of this application.

It should be understood that the term "and/or" in this specification describes only an association relationship between associated objects and represents that three relationships may exist. For example, A and/or B may indicate the following cases: Only A exists, both A and B exist, and only B exists. In addition, the character "/" in this specification generally indicates an "or" relationship between the associated objects.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person skilled in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed systems, apparatuses, and methods may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or other forms.

The units described as separate parts may or may not be physically separate. Parts displayed as units may or may not be physical units, and may be located in one position or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, comprising:
receiving, by a communication device, first indication information from a first network device, wherein the first indication information indicates whether to enable a group receiving function, and the first indication information is carried in system information SI, or the first indication information is indicated by a value of a short message indicator bit field in downlink control information DCI; and
determining, by the communication device based on the first indication information, whether to enable the group receiving function.

2. The communication method according to claim 1, wherein that the first indication information is indicated by a value of a short message indicator bit field in DCI comprises: if the value of the short message indicator bit field is 01 or 11, the first indication information indicates to enable the group receiving function.

3. The communication method according to claim 1 or 2, wherein that the first indication information is indicated by a value of a short message indicator bit field in DCI comprises: if the value of the short message indicator bit field is 00 or 10, the first indication information indicates not to enable the group receiving function.

4. The communication method according to any one of claims 1 to 3, wherein the determining, by the communication device based on the first indication information, whether to enable the group receiving function comprises:
if the first indication information indicates to enable the group receiving function, and second indication information is received by the communication device, enabling, by the communication device, the group receiving function; or
if the first indication information indicates not to enable the group receiving function, and/or second indication information is not received by the communication device, the communication device skips enabling or disable the group receiving function, wherein
the second indication information indicates a communication device group to which the communication device belongs.

5. The method according to any one of claims 1 to 4, wherein the method further comprises:
receiving, by the communication device, the second indication information from the first network device or a second network device.

6. The communication method according to claim 4 or 5, wherein the method further comprises:
if the communication device enables the group receiving function, parsing, by the communication device, third indication information in the DCI, wherein the third indication information indicates a target communication device group to receive a paging message; and
if the target communication device group comprises the communication device group to which the communication device belongs, receiving, by the communication device, the paging message.

7. The communication method according to claim 6, wherein the second indication information comprises an identifier of the communication device group to which the communication device belongs.

8. The communication method according to claim 7, wherein the second indication information further comprises any one of the following: a total quantity of communication device groups, and a total quantity of communication device groups monitoring a same paging occasion PO.

9. The method according to any one of claims 1 to 8, wherein the first network device is a first base station.

10. The method according to any one of claims 5 to 9, wherein the second network device is any one of the following: a second base station, or an access and mobility management function AMF

11. A communication method, comprising:
generating, by a first network device, first indication information, wherein the first indication information indicates whether to enable a group receiving function, and the first indication information is carried in system information SI, or the first indication information is indicated by a value of a short message indicator bit field in downlink control information DCI; and
sending, by the first network device, the first indication information to the communication device.

12. The communication method according to claim 11, wherein that the first indication information is indicated by a value of a short message indicator bit field in DCI comprises: if the value of the short message indicator bit field is 01 or 11, the first indication information indicates to enable the group receiving function.

13. The communication method according to claim 11 or 12, wherein that the first indication information is indicated by the value of the short message indicator bit field in the DCI comprises: if the value of the short message indicator bit field is 00 or 10, the first indication information indicates not to enable the group receiving function.

14. The communication method according to any one of claims 11 to 13, further comprising:
generating, by the first network device, second indication information, wherein the second indication information indicates a communication device group to which the communication device belongs, the second indication information comprises an identifier of the communication device group to which the communication device belongs, and the second indication information further comprises any one of the following: a total quantity of communication device groups, and a total quantity of communication device groups monitoring a same paging occasion PO; and
sending, by the first network device, the second indication information to the communication device.

15. A communication device, comprising a processing module and a transceiver module, wherein
the transceiver module is configured to receive first indication information from a first network device, wherein the first indication information indicates whether to enable a group receiving function, and the first indication information is carried in system information SI, or the first indication information is indicated by a value of a short message indicator bit field in downlink control information DCI; and
the processing module is configured to determine, based on the first indication information, whether to enable the group receiving function.

16. The communication device according to claim 15, wherein that the first indication information is indicated by a value of a short message indicator bit field in DCI comprises: if the value of the short message indicator bit field is 01 or 11, the first indication information indicates to enable the group receiving function.

17. The communication device according to claim 15 or 16, wherein that the first indication information is indicated by the value of the short message indicator bit field in the DCI comprises: if the value of the short message indicator bit field is 00 or 10, the first indication information indicates not to enable the group receiving function.

18. The communication device according to any one of claims 15 to 17, wherein the processing module is further configured to:
if the first indication information indicates to enable the group receiving function, and second indication information is received by using the transceiver module, enable the group receiving function; or
if the first indication information indicates not to enable the group receiving function, and/or second indication information is not received by using the transceiver module, skip enabling or disable the group receiving function, wherein
the second indication information indicates a communication device group to which the communication device belongs.

19. The communication device according to claim 18, wherein the transceiver module is further configured to receive the second indication information from the first network device or a second network device.

20. The communication device according to claim 18 or 19, wherein if the processing module enables the group receiving function, the processing module is further configured to parse third indication information in the DCI, wherein the third indication information indicates a target communication device group to receive a paging message; and
if the target communication device group comprises the communication device group to which the communication device belongs, the processing module is configured to receive the paging message by using the transceiver module.

21. The communication device according to claim 20, wherein the second indication information comprises an identifier of the communication device group to which the communication device belongs.

22. The communication device according to claim 21, wherein the second indication information further comprises any one of the following: a total quantity of communication device groups, and a total quantity of communication device groups monitoring a same paging occasion PO.

23. The communication device according to any one of claims 15 to 22, wherein the first network device is a first base station.

24. The communication device according to any one of claims 19 to 23, wherein the second network device is any one of the following: a second base station, or an access and mobility management function AMF

25. A network device, comprising a processing module and a transceiver module, wherein
the processing module is configured to generate first indication information, wherein the first indication information indicates whether to enable a group receiving function, and the first indication information is carried in system information SI, or the first indication information is indicated by a value of a short message indicator bit field in downlink control information DCI; and
the transceiver module is configured to send the first indication information to a communication device.

26. The network device according to claim 25, wherein that the first indication information is indicated by a value of a short message indicator bit field in DCI comprises: if the value of the short message indicator bit field is 01 or 11, the first indication information indicates to enable the group receiving function.

27. The network device according to claim 25 or 26, wherein that the first indication information is indicated by the value of the short message indicator bit field in the DCI comprises: if the value of the short message indicator bit field is 00 or 10, the first indication information indicates not to enable the group receiving function.

28. The network device according to any one of claims 25 to 27, wherein the processing module is further configured to generate second indication information, wherein the second indication information indicates a communication device group to which the communication device belongs, the second indication information comprises an identifier of the communication device group to which the communication device belongs, and the second indication information further comprises any one of the following: a total quantity of communication device groups, and a total quantity of communication device groups monitoring a same paging occasion PO; and
the transceiver module is further configured to send the second indication information to a communication device.

29. A communication apparatus, comprising a processor and a memory, wherein the memory comprises instructions; and when the instructions are run by the processor, the apparatus is enabled to implement the method according to any one of claims 1 to 14.

30. A computer-readable storage medium, wherein the computer-readable storage medium stores instructions; and when the instructions are run on a computer, the computer is enabled to implement the method according to any one of claims 1 to 14.

31. A communication system, comprising: the communication device according to claims 15 to 24 and the network device according to claims 25 to 28.
